# EUROPEAN PATENT APPLICATION

(11) **EP 2 015 181 A1**
(43) Date of publication of application: **14.01.2009**
(21) Application number: 07110335.2
(22) Date of filing: 15.06.2007
(51) Int. Cl.: G06F 11/00, G06Q 10/00

(54) **Software safety analysis and evaluation system**

(71) Applicant: Atomic Energy Council - Institute of Nuclear Energy Research, Lungtan, Taoyuan, Taiwan (TW)
(72) Inventor: Huang, Hui-Wen, 333, Gueishan Township, Taoyuan County (TW); Yu, Yuan-Chang, 330, Taoyuan City, Taoyuan County (TW); Chen, Ming-Hei, 334, Bade City, Taoyuan County (TW)
(74) Representative: Beck, Michael Rudolf

(57) **Abstract**

A software safety analysis (SSA) plan is made. The SSA plan includes some SSA methods. The SSA plan is obtained through considering various combinations of SSA methods. With the present invention, a decision maker and an SSA engineer can easily come to an agreement of a reasonable SSA plan by analyzing the SSA combinations.

## Description

### Field of the invention

The present invention relates to software safety; more particularly, relates to obtaining a software safety analysis (SSA) plan by evaluating various combinations of SSA methods according to various purposes.

### Description of the Related Arts

More and more digital facilities is applied in a nuclear instrumentation and control system, so that various SSA methods are used for identifying hazards in the system in hope of reducing hazards to an acceptable degree.

General SSA methods include a preliminary hazard analysis (PHA) system, a failure modes and effects analysis (FMEA) system, a fault tree analysis (FTA) system, a Markov chain modeling analysis system, a dynamic flow methodology (DFM) system and a simulator based model analysis system. But the above SSA methods have their own advantages and disadvantages. When only one method is processed, its outcome may not be satisfied. Their disadvantages are as follows:
The PHA system has to carefully choose engineers to succeed. And these engineers have to have a broad background knowledge and insight to the PHA system.
The FMEA system can briefly tell a common cause failure, yet in lack of a complete software failure constitution.
The FTA system is a main system for a probabilistic risk assessment (PRA). But, when it is used in an instrumentation and control system, a software failure rate acceptable is hard to obtain.
The Markov chain modeling analysis system describes a software failure path and a recovery process, yet a reasonable transfer rate is hard to obtain.
The DFM system is characterized in time-related and multi-states logic; but it is hard to be used in a big system. It is because a matrix made for building a model becomes extremely big when the DFM system is applied in a complex system.
The simulator based model analysis system reveals details about an event only that its operation cost is high.

As a result, if more than two systems are complimentarily combined, a satisfied result may be obtained. Then, if an evaluation standard can be obtained, engineers can evaluate combinations of systems to choose a proper one to fit resources they have. In a word, a single SSA system is not satisfied. Hence, the prior arts do not fulfill all users' requests on actual use.

### Summary of the invention

The main purpose of the present invention is to obtain an SSA plan by evaluating various combinations of SSA methods according to various purposes.

To achieve the above purpose, the present invention is a software safety analysis and evaluation system, comprising a dynamic capability analysis unit for processing a time-related analysis; a completeness evaluation unit for obtaining complete software failure situations; an achievability evaluation unit for judging a software achievability; a detail analysis unit for analyzing details of a fail design; an SNR evaluation unit for judging a process to obtain valid data through an SSA analysis; a complexity evaluation unit for evaluating a complexity of an SSA analysis; and an implementation cost evaluation unit for evaluating costs required for processing an SSA analysis, where a decision maker and an SSA engineer come to an agreement of an SSA plan by evaluating various SSA combinations according to various purposes. Accordingly, a novel software safety analysis and evaluation system is obtained.

### Brief descriptions of the drawings

The present invention will be better understood from the following detailed description of the preferred embodiment according to the present invention, taken in conjunction with the accompanying drawings, in which
FIG.1 is the structural view showing the preferred embodiment according to the present invention;
FIG.2 is the view showing the SAA categories;
FIG.3 is the view showing the evaluation index levels;
FIG.4 is the view showing the evaluation index values;
FIG.5 is the view showing the first individual evaluation;
FIG.6 is the view showing the first combinational evaluation;
FIG.7 is the view showing the second individual evaluation;
FIG.8 is the view showing the second combinational evaluation;
FIG.9 is the view showing the third individual evaluation; and
FIG.10 is the view showing the third combinational evaluation;

### Description of the preferred embodiment

The following description of the preferred embodiment is provided to understand the features and the structures of the present invention.

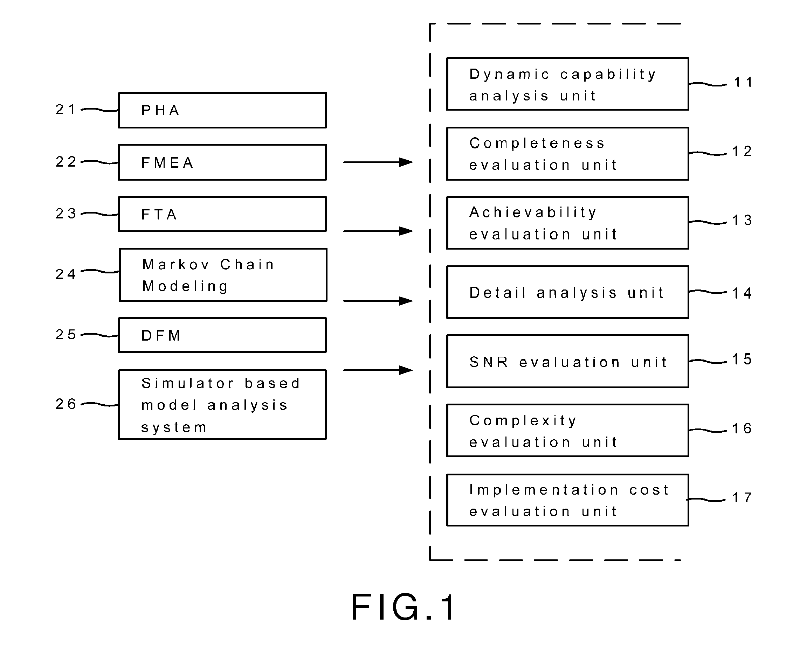

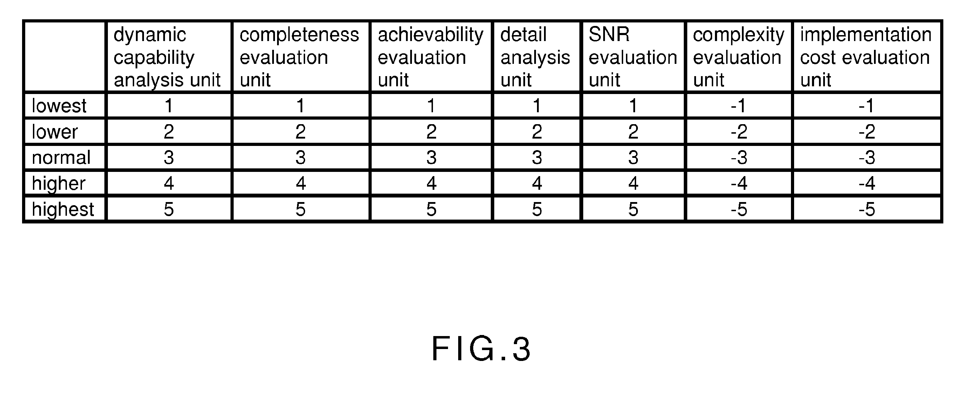

Please refer to FIG.1 to FIG.4, which are a structural view showing a preferred embodiment according to the present invention; and views showing SAA categories, evaluation index levels and evaluation index values. As shown in the figures, the present invention is a software safety analysis and evaluation system, comprising a dynamic capability analysis unit 11, a completeness evaluation unit 12, an achievability evaluation unit 13, a detail analysis unit 14, a signal-to-noise ratio (SNR) evaluation unit 15, a complexity evaluation unit 16 and an implementation cost evaluation unit 17, where a decision maker and a software safety analysis (SSA) engineer come to an agreement of an SSA plan by evaluating various combinations of SSA methods according to various purposes.

The dynamic capability analysis unit 11 processes a time-related analysis. For example, a simulator based model analysis system 26 is a time-related analysis tool, yet a fault tree analysis (FTA) system 23 is not.

The completeness evaluation unit 12 is used to contain complete important software failure situations. For example, the FTA system 23 has a structure to be easily expanded so that it contains most of the important software failure situations. Yet, the simulator based model analysis system 26 analyzes a design at a time so that it is hard to contain all designs.

The achievability evaluation unit 13 judges an achievability of a target. For example, a core damage frequency considers a frequency of a software failure, which is a goal of the FTA system 23. However, to obtain a reasonable frequency of a software failure is not easy. And a goal for the simulator based model analysis system 26 is to identify hazards in a system, which are easier to obtain.

The detail analysis unit 14 analyzes details of a fail design. For example, the simulator based model analysis system 26 provides a detail analysis of a design; yet, a preliminary hazard analysis (PHA) 21 only provides a simple answer.

The SNR evaluation unit 15 judges a process for obtaining valid data through an SSA analysis. For example, the FTA system 23 obtains more valid data than a failure modes and effects analysis (FMEA) system 22 through a complete software failure structure. Thus, the FTA system 23 has a higher SNR ratio than the FMEA system 22.

The complexity evaluation unit 16 evaluates a complexity of an SSA analysis. For example, the FTA system 23 has more steps to be taken than the PHA system 21; so, the FTA system 23 has a higher complexity than the PHA system 21. It means that it takes more time on processing the FTA system 23; and a time-urgent schedule may thus lag.

The implementation cost evaluation unit 17 evaluates costs required for processing an SSA analysis. For example, when the simulator based model analysis system 26 is processed, costs considered includes those for introducing a plant simulation code, building an adequate instrumentation and a program verification system, etc.

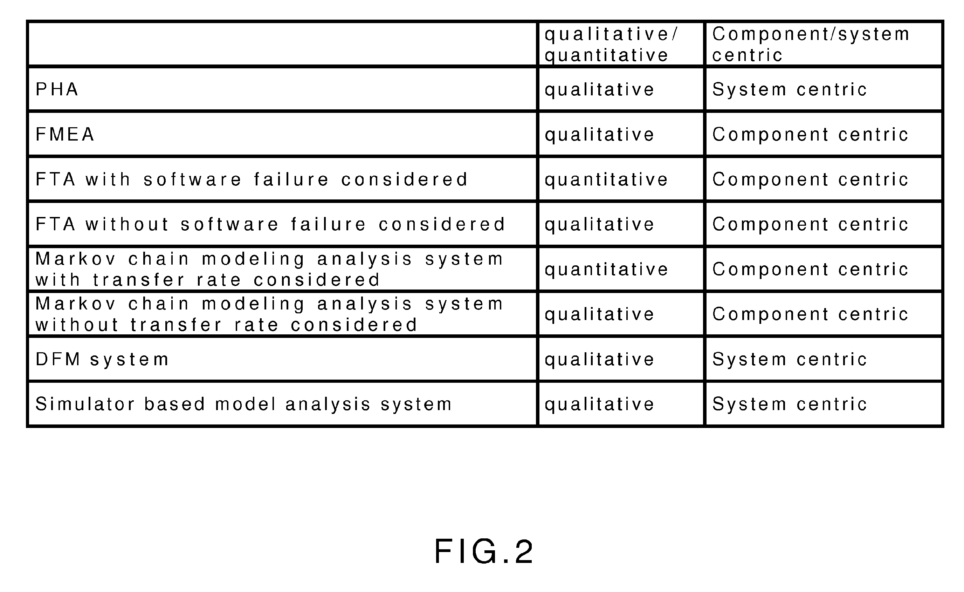

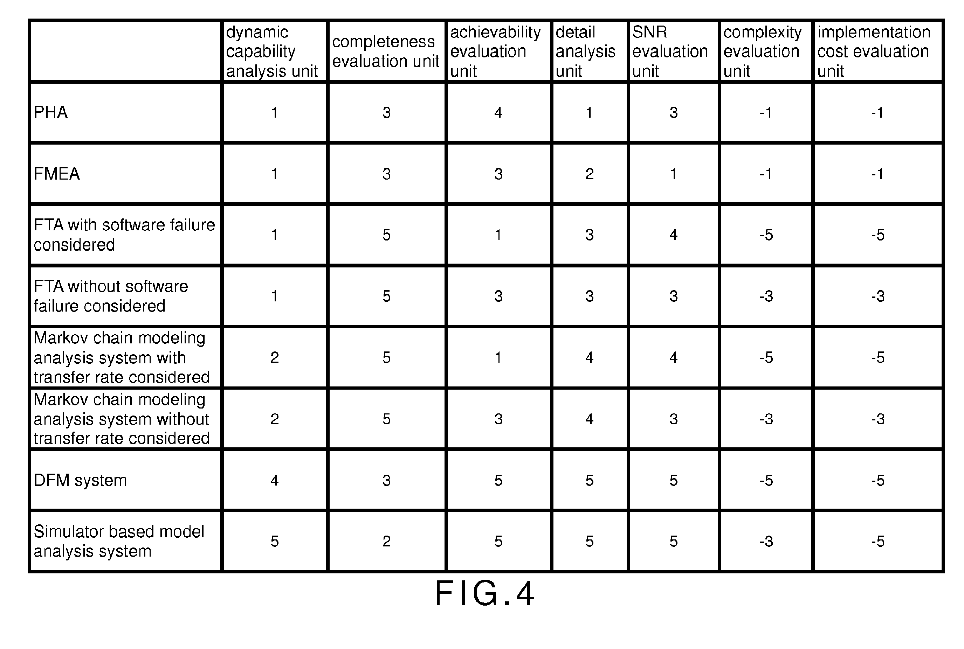

On using the present invention, a few general SSA methods are categorised according to their characteristics (as shown in FIG.2), where the SSA methods includes a PHA system 21, an FMEA system 22, an FTA system 23, a Markov chain modeling analysis system 24, a dynamic flow methodology (DFM) system 25 and a simulator based model analysis system 26; and the SSA methods are divided into qualitative methods, quantitative methods, component centric methods and system centric methods. Each of the dynamic capability analysis unit 11, the completeness evaluation unit 12, the achievability evaluation unit 13, the detail analysis unit 14, the SNR evaluation unit 15, the complexity evaluation unit 16 and the implementation cost evaluation unit 17 has an evaluation index of the lowest index, the lower index, the normal index, the higher index or the highest index. Therein, the evaluation index obtains 1, 2, 3, 4 and 5 assigned to the lowest index, the lower index, the normal index, the higher index and the highest index, respectively, as positive meanings; and obtains -1, -2, -3, -4 and -5 assigned to the lowest index, the lower index, the normal index, the higher index and the highest index, respectively, as negative meanings. Thus, values for evaluation indexes are obtained, as shown in FIG.4; and the values are changeable according to actual needs. The qualitative methods do not consider validation rate and transfer rate; yet the quantitative methods do. The component centric methods count a software failure as a matter of the software itself. Yet, the system centric methods judge the software failure in a system level and do not think the software failure meaningful on a software level, which, in this meaning, is analyzed as a system failure or a system safety issue.

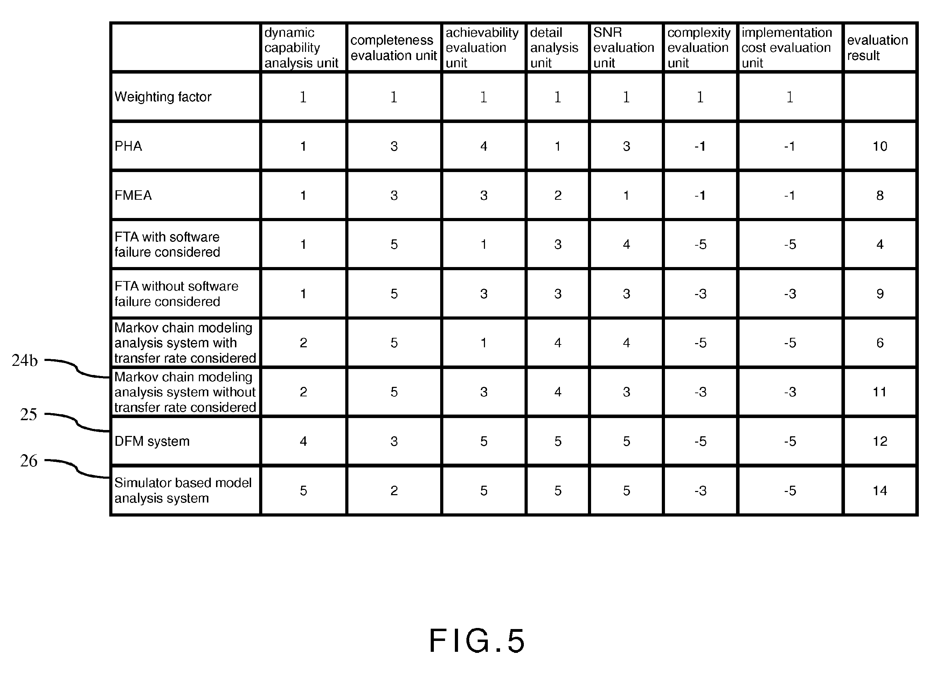

Please refer to FIG.5 to FIG.10, which are views showing a first individual evaluation and a first combinational evaluation; a second individual evaluation and a second combinational evaluation; and a third individual evaluation and a third combinational evaluation. As shown in the figures, because a combination of several SSA methods are usually required, five combinations from combination (A) to combination (E) are considered in the following designs, comprising:
(A) PHA+FMEA+FTA with software failure considered;
(B) PHA+FMEA+FTA with software failure considered+Markov chain modeling analysis system with transfer rate considered;
(C) PHA+FMEA+FTA without software failure considered+Markov chain modeling analysis system without transfer rate considered;
(D) PHA+DFM; and
(E) PHA+FMEA+FTA without software failure considered+simulator based model analysis system.

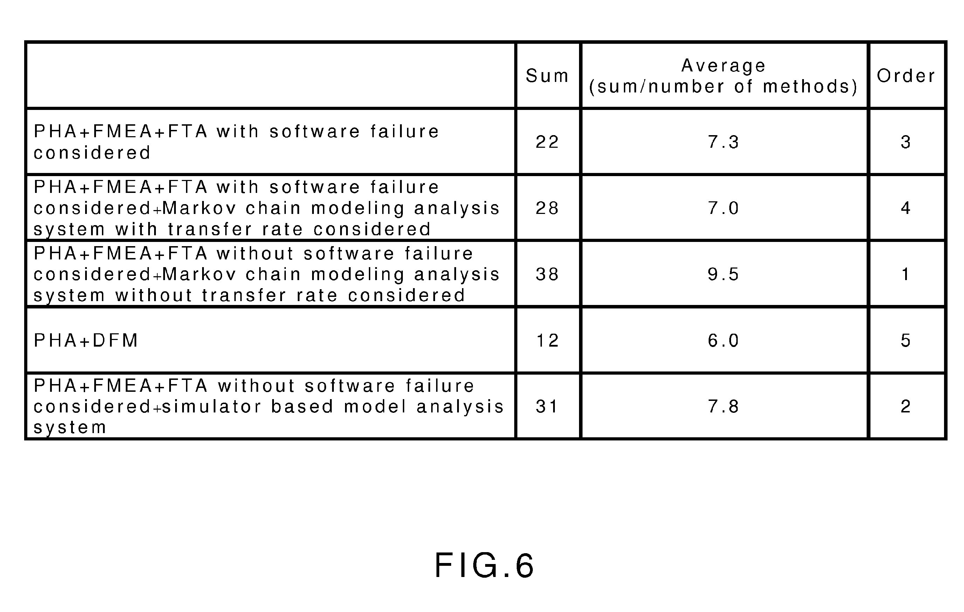

In a first design, values for basic evaluation indexes (as shown in FIG.4) are used with all weighting factors set to be 1. In individual evaluation results (as shown in FIG.5), the Markov chain modeling analysis system without transfer rate considered 24b, the DFM system 25 and the simulator based model analysis system 26 have the higher index values. In combinational evaluation results (as shown in FIG.6), the combination of PHA+FMEA+FTA without software failure considered+Markov chain modeling analysis system without transfer rate considered is the best among combination (A) to (E).

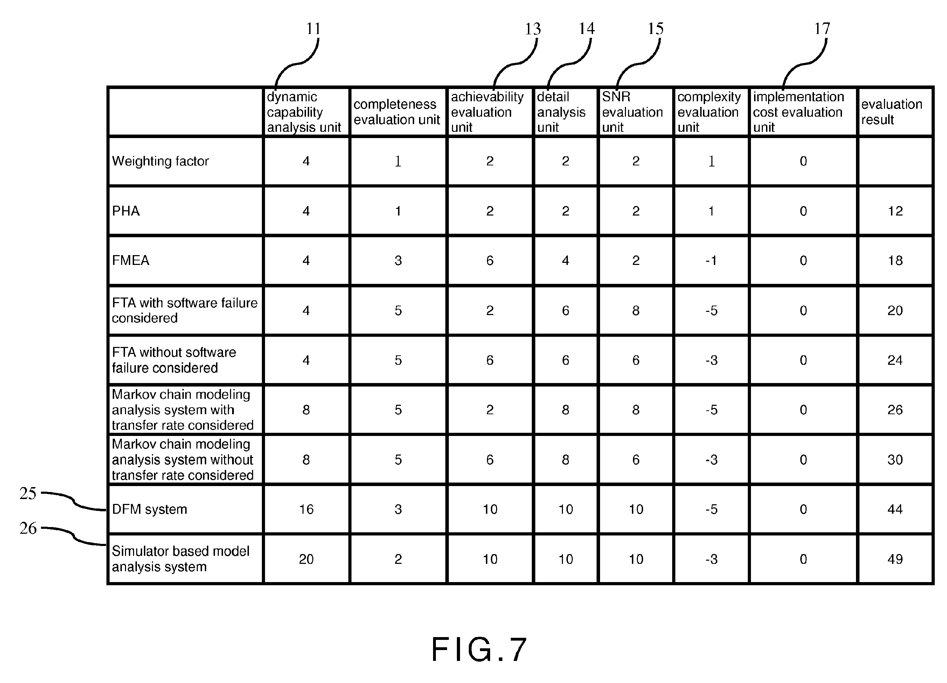

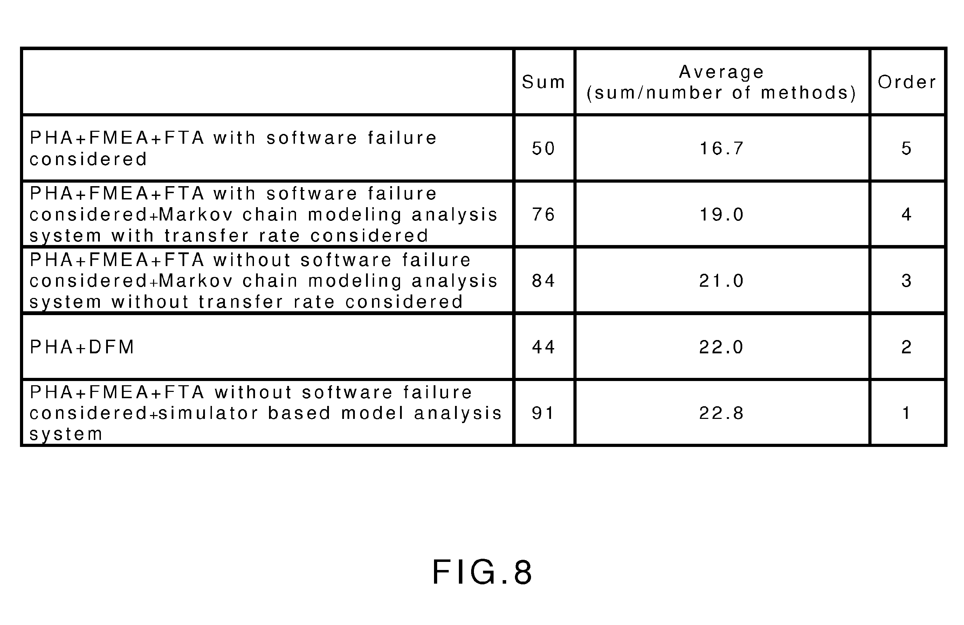

In a second design, a dynamic capability analysis unit 11, a achievability evaluation unit 13, a detail analysis unit 14 and an SNR evaluation unit 15 are emphasized; and an implementation cost evaluation unit 17 is not processed under a certain consideration. In individual evaluation results (as shown in FIG.7), the DFM system 25 and the simulator based model analysis system 26 obtain higher index values. In combinational evaluation results (as shown in FIG.8), the combination of PHA+FMEA+FTA without software failure considered+simulator based model analysis system is the best among combination (A) to (E).

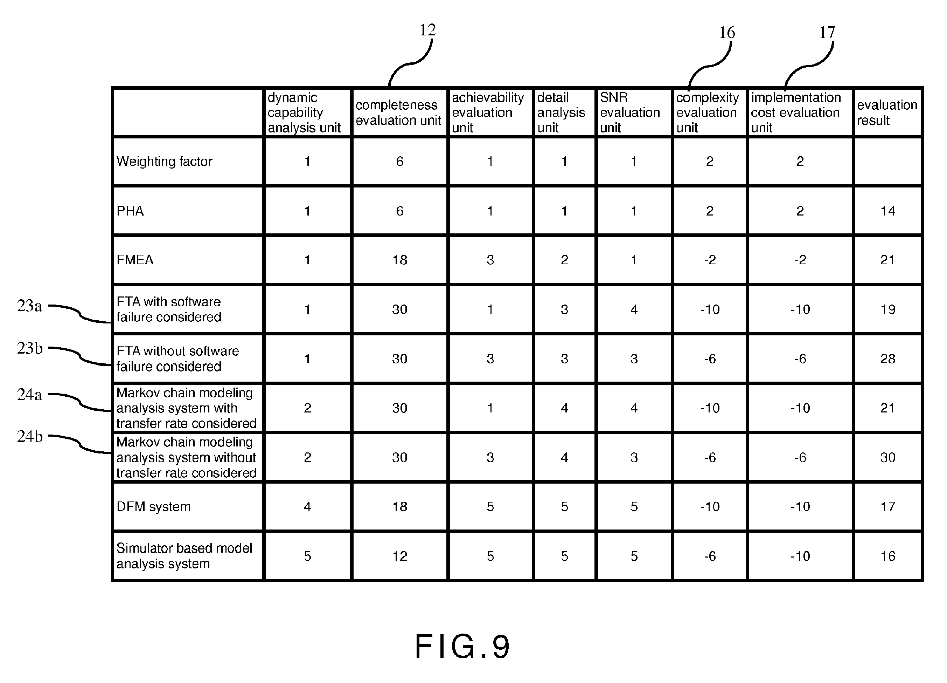

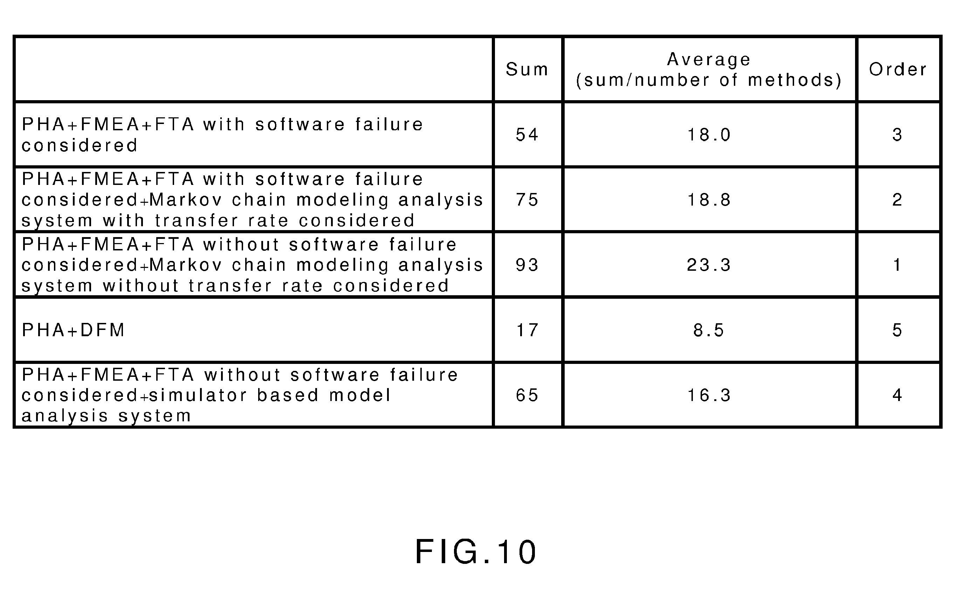

In a third design, the completeness evaluation unit 12 is emphasized; and the complexity evaluation unit 16 and the implementation cost evaluation unit 17 are especially taken into consideration owing to the limitations on budget and schedule. In individual evaluation results (as shown in FIG.9), the combination of the FTA system without software failure considered 23b and the Markov chain modeling analysis system without transfer rate considered 24b obtains a higher index value than the combination of the FTA system with software failure considered 23a and the Markov chain modeling analysis system with transfer rate considered 24a. In combinational evaluation results (as shown in FIG.10), the combination of PHA+FMEA+FTA without software failure considered+Markov chain modeling analysis system without transfer rate considered is the best among combination (A) to (E) again.

From the results as shown above, because acceptable quantitative software failure rate and transfer rate are hard to obtain, a combination of traditional PHA+FMEA+FTA with software failure considered+Markov chain modeling analysis system with transfer rate considered is not competitive. However, qualitative methods of FTA system and Markov chain modeling analysis system have high values on understanding a software failure. And system centric methods, like the DFM system 25 and the simulator based model analysis system 26 have advantages for the dynamic capability analysis unit 11, the achievability evaluation unit 13, the detail analysis unit 14 and the SNR evaluation unit 15 (as shown in FIG.7.) Although evaluation results may be varied from time to time following the development of SSA methods, the main idea of the SSA methods are more important than the values obtained in the evaluation. Thus, the present invention can play a role as a platform for obtaining a common agreement on an SSA plan.

To sum up, the present invention is a software safety analysis and evaluation system, where a decision maker and a software safety analysis (SSA) engineer come to an agreement of an SSA plan by evaluating various combinations of SSA methods according to various purposes.

The preferred embodiment herein disclosed is not intended to unnecessarily limit the scope of the invention. Therefore, simple modifications or variations belonging to the equivalent of the scope of the claims and the instructions disclosed herein for a patent are all within the scope of the present invention.

## Claims

1. A software safety analysis and evaluation system, comprising:
a dynamic capability analysis unit, said dynamic capability analysis unit processing time-related analysis;
a completeness evaluation unit, said completeness evaluation unit evaluating complete important software failure situations;
an achievability evaluation unit, said achievability evaluation unit evaluating an achievability of a target;
a detail analysis unit, said detail analysis unit analysing details of a failure;
a signal-to-noise ratio (SNR) evaluation unit, said SNR evaluation unit evaluating a process to obtain valid data through a software safety analysis (SSA);
a complexity evaluation unit, said complexity evaluation unit evaluating a complexity of processing said SSA; and
an implementation cost evaluation unit, said implementation cost evaluation unit evaluating a cost of processing said SSA.

2. The system according to claim 1, wherein said SSA is selected from a group consisting of a preliminary hazard analysis (PHA), a failure modes and effects analysis (FMEA), a fault tree analysis (FTA), a Markov chain modeling analysis, a dynamic flow methodology (DFM) analysis and a simulator based model analysis.

3. The system according to claim 1 or 2, wherein said SSA is selected from a group consisting of a qualitative analysis, a quantitative analysis, a component centric analysis and a system centric analysis.

4. The system according to one of claims 1 to 3, wherein each of said dynamic capability analysis unit, said completeness evaluation unit, said achievability evaluation unit, said detail analysis unit, said SNR evaluation unit, said complexity evaluation unit and said implementation cost evaluation unit has an evaluation index selected from a group consisting of the lowest index, the lower index, the normal index, the higher index and the highest index.

5. The system according to one of claims 1 to 4, wherein said evaluation index obtains 1, 2, 3, 4 and 5 assigned to the lowest index, the lower index, the normal index, the higher index and the highest index, respectively, as positive meanings.

6. The system according to one of claims 1 to 5, wherein said evaluation index obtains -1, -2, -3, -4 and -5 assigned to the lowest index, the lower index, the normal index, the higher index and the highest index, respectively, as negative meanings.
